# EUROPÄISCHE PATENTSCHRIFT

(11) **EP 1 350 695 B1**
(45) Veröffentlichungstag und Bekanntmachung des Hinweises auf die Patenterteilung: **04.05.2005**
(21) Anmeldenummer: 02090231.8
(22) Anmeldetag: 04.07.2002
(51) Int. Cl.: B60R 22/195, B60R 22/34, B60R 22/46

(54) **Sicherheitsgurtvorrichtung**
Safety belt device
Dispositif de ceinture de sécurité

(30) Priorität: 18.03.2002 DE 10213065
(43) Veröffentlichungstag der Anmeldung: 08.10.2003
(73) Patentinhaber: TAKATA-PETRI (Ulm) GmbH, 89081 Ulm (DE)
(72) Erfinder: Herrmann, Thomas, 89171 Illerkirchberg (DE); Ruge, Vadim, 88483 Burgrieden (DE); Klingauf, Gerhard, 88481 Balzheim (DE); Slucha, Benyamin, 89079 Ulm (DE)
(74) Vertreter: Rummler, Felix Dipl. Ing.

(56) Entgegenhaltungen:
- DE-A- 2 444 801
- DE-A- 19 957 794
- US-A- 6 135 380

## Beschreibung

Die Erfindung betrifft eine Sicherheitsgurtvorrichtung für Fahrzeuge.

Insbesondere und nicht ausschließlich betrifft die Erfindung eine Sicherheitsgurtvorrichtung für ein Fahrzeug, mit einer Gurtrolle, einem Gurtschloss, einer an der B-Säule des Fahrzeugs angebrachten Gurtumlenkvorrichtung, einem Gurtkraftbegrenzer mit einem Torsionsstab, sowie einem Gurtstraffer. Im Falle eines Unfalls wird der Gurtstraffer ausgelöst und gleichzeitig ein Vortordieren des Torsionsstabs bewirkt. Vorzugsweise wird die Vortorsion durch die bei der Gurtstraffung entstehenden Kräfte bewirkt. Die Vortorsion hat den Vorteil, dass die Kraftbegrenzung auf einem hinsichtlich der Rückhaltekraft und des Insassenschutzes optimalem Kraftniveau einsetzt.

### Stand der Technik

Generell sind Sicherheitsgurtvorrichtungen bekannt, mit einem Sicherheitsgurt, einer einem mehr oder weniger großen Teil des Gurtes aufnehmenden, am Fahrzeugchassis drehbar befestigten Gurtrolle, die durch einen Drehmoment-Erzeugungsmechanismus, insbesondere eine Spiralfeder in Gurtwickelrichtung vorgespannt ist, und weiter eine Abwickel-Sperranordnung aufweist, welche bei versuchtem schnellen Auszug des Gurtes und vorzugsweise auch bei unfallbedingten Beschleunigungen das Abwickeln des Gurtes gegen die Kraft des Drehmoment-Erzeugungsmechanismus sperrt, einer oberhalb der Schulter von durch den Sicherheitsgurt gehaltenen Insassen angeordneten Gurtumlenkvorrichtung, zu der der Gurt von der Gurtrolle geführt und durch die der Gurt so umlenkbar ist, dass er sich dem Insassen nähert, sowie einem Gurtschloss, zu dem der Gurt von der Gurtvorrichtung verläuft und welches an ein an einem Fahrzeugchassis angebrachtes Zugglied befestigt ist (siehe DE 199 15 024).

Da der Sicherheitsgurt aufgrund der Wirkung des Drehmoment-Erzeugungsmechanismus an der Gurtrolle nur relativ lose am Insassen anliegt, werden häufig Gurtstraffer verwendet, die bei einem Unfall die bei einem Unfall den Sicherheitsgurt schlagartig so spannen, dass er fest am Insassen zur Anlage kommt. Normalerweise wirken derartige Gurtstraffer auf die Gurtrolle, indem diese beispielsweise durch eine pyrotechnische Ladung schlagartig in Gurtstraffrichtung um ein vorbestimmtes Stück gedreht wird, wenn eine unfallbedingte Beschleunigung auftritt (siehe EP 581 288 B1).

Aus der DE 199 57 794 A1 ist eine Sicherheitsgurtanordnung bekannt, bei welcher die Gurtumlenkvorrichtung durch eine entsprechend verschiebbare Anordnung am Fahrzeugchassis selbst zur Gurtstraffung genutzt wird.

Bekannt sind weiterhin Sicherheitsgurtanordnungen mit Gurtkraftbegrenzern. Die Gurtkraftbegrenzung wird prinzipiell durch die Verdrehung eines Torsionsstabs erreicht. Solche Gurtkraftbegrenzer weisen generell einen Flansch, eine Spindel zum Auf- und Abrollen des Gurtes, sowie einen Torsionsstab auf. Der Flansch wird bei einem Unfall mit Hilfe einer Verriegelungsvorrichtung verdrehsicher mit dem Kfz-Aufbau verbunden, wobei sich das auf der Spindel aufgewickelte Gurtband mit einer sich aus dem Torsionsmoment des Torsionsstabs ergebenden begrenzten Kraft abspulen kann. In der US-Patentschrift 6,135,380 ist eine Sicherheitsgurtanordnung beschrieben, die sowohl einen Gurtkraftbegrenzer als auch eine Gurtstraffeinrichtung aufweist.

Aus der DE 24 44 801 A ist eine Sicherheitsgurtvorrichtung bzw. ein Verfahren bekannt, die dem Oberbegriff des Anspruchs 1 bzw. 24 entspricht.

Nachteilig bei der letzteren Sicherheitsgurtanordnung ist, dass der Torsionsstab einen gewissen Verdrehwinkel benötigt, um sein maximales Kraftniveau zu erreichen, auf welchem eine hinsichtlich des Insassenschutzes optimale Gurtbegrenzung bewirkt wird. Während der Verdrehung des Torsionsstabs um diesen Verdrehwinkel wird der Insasse nicht mit der maximal möglichen Schulterkraft zurückgehalten. Dies führt zu einer erhöhten Vorverlagerung des Fahrzeuginsassen.

### Zusammenfassung der Erfindung

Die vorliegende Erfindung hat zur Aufgabe, diese Nachteile zumindest abzumindern. Diese Aufgabe wird durch die in den unabhängigen Ansprüchen angegebene Erfindung gelöst. Vorteilhafte Ausgestaltungen der Erfindung sind den Unteransprüchen zu entnehmen.

Erfindungsgemäß ist ein Gurtkraftbegrenzer geschaffen für eine Sicherheitsgurtvorrichtung eines Fahrzeugs, mit einem Torsionsstab, und einer Vortorsionseinrichtung zum Vortordieren des Torsionstabes bei Detektion eines Unfalles.

Durch Vortordieren des Torsionsstabes bei Detektion eines Unfalles setzt die Gurtkraftbegrenzung bei Eintauchen eines Fahrzeuginsassen in den Sicherheitsgurt auf einem höheren Kraftniveau ein. Dadurch wird der Gurtsauszugweg begrenzt und der Fahrzeuginsassen besser geschützt.

Die Vortorsion kann auf verschiedene Arten bewirkt werden. Beispielsweise kann eine pyrotechnische oder eine elektromagnetische Einrichtung zum Verdrehen des Torsionsstabes vorgesehen sein.

Weiterhin ist eine Sicherheitsgurtvorrichtung für ein Fahrzeug geschaffen, mit: einem Gurtstraffer; und einem erfindungsgemäßen Gurtkraftbegrenzer.

In einer solchen Sicherheitsgurtvorrichtung wird im Gegensatz zu bekannten Gurtvorrichtungen das Verdrehen des Torsionsstabes nicht erst durch Eintauchen des Fahrzeuginsassen in den Gurt, sondern bereits davor mittels der Vortorsionseinrichtung bewirkt.

Vorzugsweise weist die Sicherheitsvorrichtung eine Aktivierungseinrichtung zur im wesentlichen gleichzeitigen Aktivierung des Gurtstraffers und der Vortorsionseinrichtung auf. Somit wird die Zeit unmittelbar nach Detektion eines Unfalles vor Eintauchen des Fahrzeuginsassen in den Gurt genutzt, um den Gurt vorzustraffen und den Torsionsstab vorzutordieren.

Durch eine im wesentlichen zeitgleiche Auslösung des Gurtkraftbegrenzers und des Gurtstraffers kann die Gurtstraffung genutzt werden, um den Torsionsstab vorzutordieren und im wesentlichen auf jenes Drehmomentniveau zu überführen, auf welchem ein optimales Verhältnis aus Rückhaltekraft und Kraftbegrenzung erreicht ist.

Der während der Gurtstraffung zur Verfügung stehende Vorverlagerungsraum des Fahrzeuginsassen wird demnach optimal zur Vortorsion des Drehstabs verwendet.

Insbesondere ist dazu eine Sicherheitsgurtvorrichtung für ein Fahrzeug geschaffen, mit: einem Sicherheitsgurt; einer am Fahrzeugchassis drehbar befestigten Gurtrolle zum Auf- und Abrollen des Sicherheitsgurtes; einem Gurtschloss zur lösbaren Verankerung des Sicherheitsgurtes am Fahrzeug; einer Gurtumlenkvorrichtung zum Umlenken des Sicherheitsgurtes zwischen der Gurtrolle und dem Gurtschloss; und einer Verriegelungsvorrichtung zur Verriegelung des Torsionsstabs zwischen der Gurtrolle und dem Fahrzeugchassis, wobei der Gurtkraftbegrenzer durch Aktivierung der Verriegelungsvorrichtung auslösbar ist.

In einer weiteren vorteilhaften Ausgestaltung weist der Gurtstraffer eine Bewegungserzeugungsvorrichtung auf, zur Verschiebung zumindest eines Teils der Gurtumlenkvorrichtung in Gurtstraffrichtung bei Auslösung des Gurtstraffers durch die Aktivierungseinrichtung. In dieser Ausgestaltung wird mit Vorteil die Bewegung des zumindest einen Teils der Gurtumlenkvorrichtung in Gurtstraffrichtung dazu ausgenutzt, eine Vortorsion des Torsionsstabs herbeizuführen.

Erfindungsgemäß ist außerdem eine Verfahren geschaffen zur Betätigung eines Sicherheitsgurtsystems in einem Fahrzeug, mit einem Gurtkraftbegrenzer mit einem Torsionsstab, wobei das Verfahren folgende Schritte aufweist:
- Detektieren eines Unfalls
- Vortordieren des Torsionsstabs vor Einsatz eines auf den Torsionsstab einwirkenden Drehmomentes aufgrund eines in den Sicherheitsgurt eintauchenden Fahrzeuginsassen.

Gemäß diesem Verfahren wird das Vortordieren durchgeführt, bevor die maximale Gurtkraft durch einen in den Gurt eintauchenden Fahrzeuginsassen eintritt. Dadurch geht keine wertvolle und zum Rückhalt des Insassen benötigte Gurtstrecke bei der Kraftbegrenzung verloren.

Vorzugsweise wird das Straffen des Sicherheitsgurtes durch Bewegen zumindest eines Teils einer Gurtumlenkvorrichtung in Gurtstraffrichtung bewirkt. Dadurch können die bei der Straffung auf den Gurt einwirkenden Kräfte in vorteilhafter Weise zum Vortordieren des Torsionsstabs verwendet werden. Dies ist in besonders einfacher Weise dadurch realisierbar, dass der Torsionsstab mit einer Gurtrolle gekoppelt wird, so dass bei Gurtstraffung ein Drehmoment auf die Gurtrolle und somit auf den Torsionsstab ausgeübt wird.

### Beschreibung der Zeichnungen

Die Erfindung wird im folgenden beispielsweise anhand der Zeichnungen beschrieben; in diesen zeigen:
- Figur 1: schematisch einen Querschnitt durch den Gurtkraftbegrenzer;
- Figur 2: eine schematische perspektivische Ansicht der Einzelteile des Gurtkraftbegrenzers aus Figur 1
- Figur 3: eine perspektivische Explosionsdarstellung einer Sicherheitsgurtvorrichtung im Bereich der Gurtumlenkvorrichtung nach einem Ausführungsbeispiel der Erfindung;
- Figur 4: eine schematisch teilweise geschnittene Seitenansicht einer Sicherheitsgurtvorrichtung im Bereich der Gurtumlenkvorrichtung und der Gurtrolle und im normalen Betriebszustand;
- Figur 5: eine zu Figur 2 analoge Ansicht nach Auslösung der Bewegungserzeugungsvorrichtung;
- Figur 6: eine vergrößerte, schematische perspektivische Ansicht eines Kolbens, der Kolbenstange und eines Teils des Zylinders der Sicherheitsgurtvorrichtung nach Figur 3 im Zustand während einer Auslösung der Bewegungserzeugungsvorrichtung;
- Figur 7: eine zu Figur 6 analoge Ansicht nach Beendigung einer Gurtstraffung; und
- Figuren 8 bis 12: schematisch die Funktionsweise sowie die resultierenden Gurtkräfte eines Gurtsystems nach einer Ausgestaltung der Erfindung.

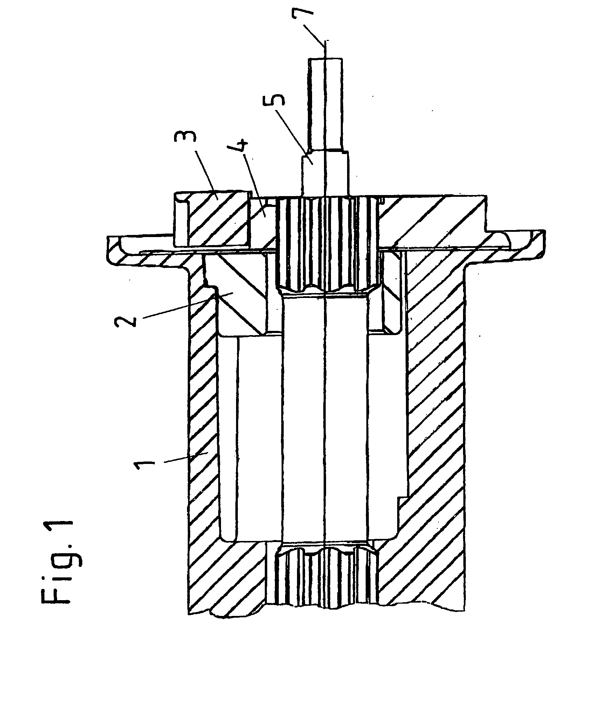

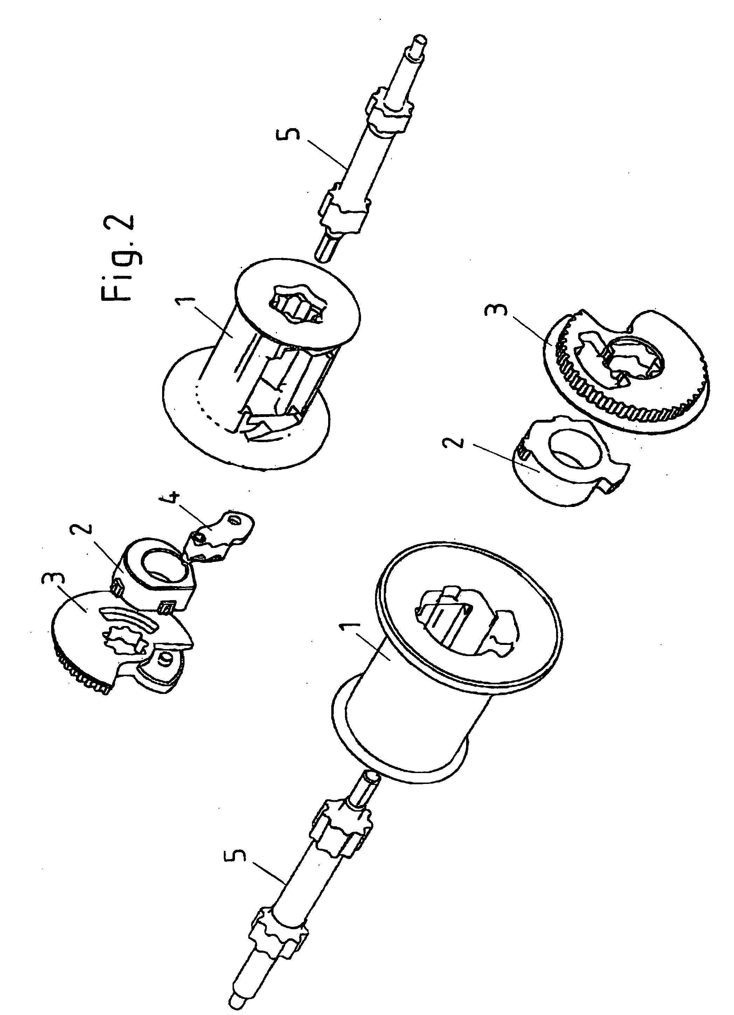

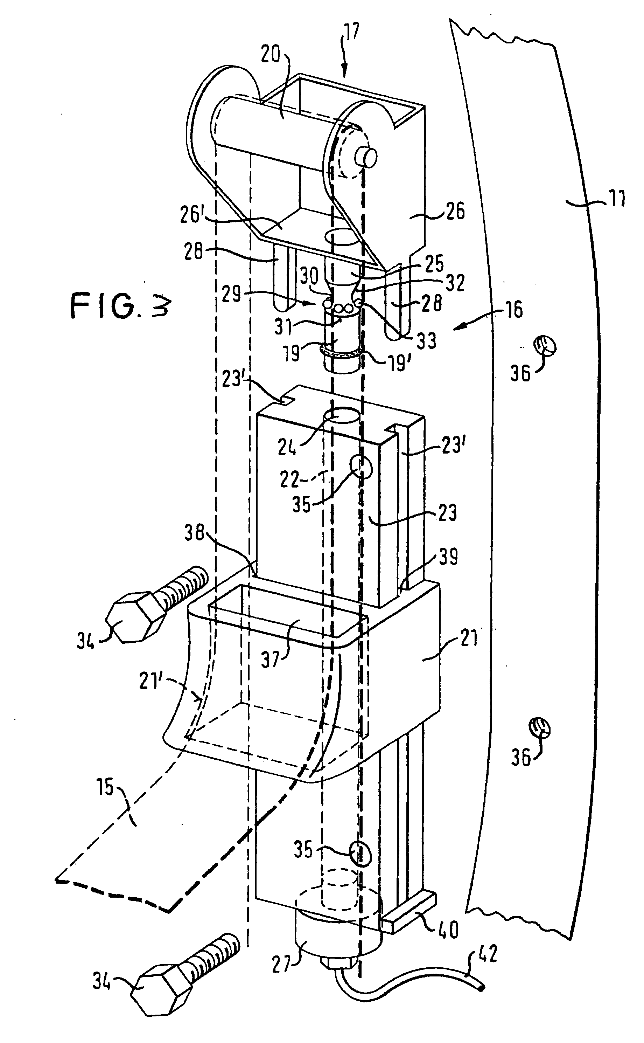

Figur 1 zeigt schematisch den Querschnitt eines Kraftbegrenzers für ein Gurtsystem nach dem ersten Ausführungsbeispiel der Erfindung. Figur 2 zeigt die Einzelteile des Begrenzers in perspektivischer Ansicht. Der Kraftbegrenzer umfasst eine drehbare Spindel 1 mit einem Spindellager 2, auf der ein nicht gezeigter Haltegurt auf- und abrollbar ist. An dem einen entlang der Drehachse liegenden Ende der Spindel 1 ist ein relativ zur Spindel 1 drehbarer Flansch 3 angeordnet. Außerdem ist eine Sperrklinke 4 vorgesehen, die bei einem Unfall den Flansch 3 arretiert.

Weiterhin ist ein Torsions- oder Drehstab 5 vorgesehen, der an einem der beiden Enden einen Zahnkranz aufweist, mittels derer der Drehstab 5 in entsprechenden Aussparungen der Spindel 1 bzw. des Flansches 3 verdrehsicher verankert ist. Der Drehstab 5 arretiert die Spindel 1 und den Flansch 3 miteinander, so dass im Ruhezustand des Begrenzers (d. h. in Abwesenheit eines Unfalls) die Spindel 1 und der Flansch 3 gemeinsam um eine Drehachse 7 rotieren können, um den Gurt auf die Spindel 1 auf- oder von dieser abzurollen.

Die beiden Enden des Drehstabes 5 können relativ zueinander verdreht werden. Diese Eigenschaft wird dazu verwendet, eine Gurtkraftbegrenzung herbeizuführen.

Bei einem Unfall verankert die Sperrklinke 4 den Flansch 3 und somit das eine Ende des Drehstabes 5 am Rahmen der Gurtanordnung. Überschreitet das auf den Drehstab 5 wirkende Drehmoment einen vorbestimmten Wert, so verdreht sich der Drehstab 5 in Abhängigkeit von diesem Drehmoment und ermöglicht somit eine zur Verdrehung des Drehstabes 5 proportionale Rotation der Spindel 1. Durch die Rotation der Spindel kann sich der Gurt abrollen, wodurch eine Begrenzung der Gurtkraft herbeigeführt wird. Die Gurtkraftbegrenzung hält so lange an, bis der Drehstab vollständig verdreht ist.

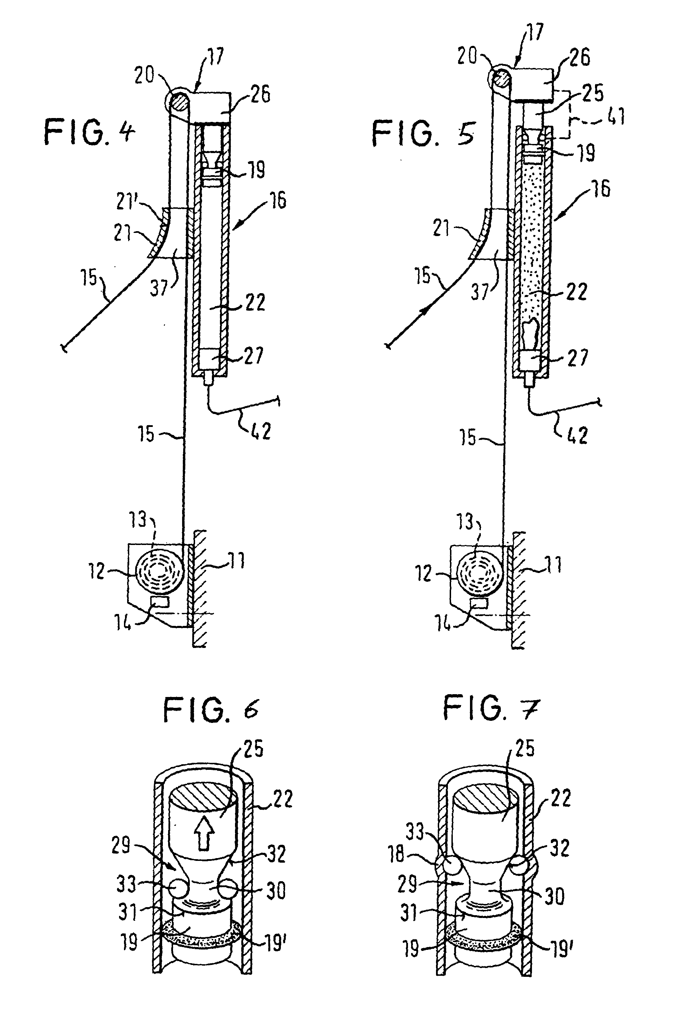

Die Figuren 3 bis 7 zeigen schematisch den Gurtstraffer eines Gurtsystems nach einer Ausgestaltung der Erfindung.

Nach Figur 3 wird eine mit seitlichen Führungsnuten 23' versehene Profilschiene 23 mit im wesentlichen rechteckigen Querschnitt mittels durch Bohrungen 35 in Gewindebohrungen 36 der B-Säule des Fahrzeugchassis 11 eingeschraubter Bolzen 34 am Fahrzeug so befestigt, dass eine Flachseite der Profilschiene 23 an der B-Säule anliegt und die Nuten 23' auf beiden Schmalseiten der Schiene frei zugänglich sind.

Auf die Schiene 23 ist ein Gurt-Ablenkglied 21 aufgeschoben, welches eine zur Schiene 23 komplementäre Halterungsausnehmung 38 mit seitlich in die Nuten 23' eingreifenden Federn 39 aufweist. In dem von der Halterungsausnehmung 38 liegenden Bereich weist das Gurt-Ablenkglied 21 einen vertikalen Durchgangskanal 37 für den Sicherheitsgurt 15 auf.

Oberhalb der Schiene 23 ist ein Rahmen 26 vorgesehen, der eine Gurt-Umlenkrolle 20 trägt und unten mit einer Kolbenstange 25 sowie seitlich angeordneten, sich nach unten erstreckenden Führungsstangen 28 fest verbunden ist.

Unten an der Kolbenstange 25 schließt über eine Periphernut 30 ein Kolben 19 mit einer O-Dichtung 19' an. Zentral in der Schiene 23 ist eine einen vertikalen Zylinder 22 bildende durchgehende Bohrung vorgesehen, in die von unten ein Gasgenerator 27 eingesetzt ist. Von oben greift der Kolben 19 in den Zylinder 22 ein, wenn der Rahmen 26 gemäß Figur 4 auf die Schiene 23 so weit aufgesetzt ist, dass der Boden 26' des Rahmens 26 auf der Oberseite der Schiene 23 aufliegt.

Im zusammengebauten Zustand nach Figur 4 befinden sich der Kolben 19 und die Kolbenstange 25 vollständig innerhalb des Zylinders 22. Die Kolbenstange 25 verläuft dann durch die obere Öffnung 24 des Zylinders 22. Der Kolben 19, der Zylinder 22 und der Gasgenerator 27 bilden zusammen eine Bewegungserzeugungsvorrichtung 16.

Das Gurt-Umlenkglied 20, 26 und das darunter höhenverstellbar an der Schiene 23 vorgesehene Gurt-Ablenkglied 21 bilden zusammen die Gurtumlenkvorrichtung 17, die dafür sorgt, dass der Gurt in der richtigen Höhenlage zur Schulter des angeschnallten Insassen gelangt.

Nach Figur 4 erstreckt sich der eine Trum des Sicherheitsgurtes 15 von der an einer geeignete Stelle des Fahrzeugchassis 11 befestigten Gurtrolle 12 im wesentlichen vertikal durch den Durchgangskanal 37 des Gurt-Ablenkgliedes 21 zur Gurt-Umlenkrolle 20, um die er um 180° herumgelegt ist. Das von der B-Säule abgewandte andere Trum des Sicherheitsgurtes 15 verläuft dann von oben durch den gleichen Durchlasskanal 37, vom dem aus er zur nicht dargestellten Schulter des angeschnallten Insassen und weiter zum ebenfalls nicht gezeigten Gurtschloss führt. Um einen sanftern Übergang dieses Trums von der vertikalen Position in den Schrägverlauf zum Insassen hin zu erhalten, weist das Gurt-Ablenkglied in dem Fahrzeuginnenraum zugewandten Bereich eine Abrundung 21' auf.

An der Gurtrolle 12 ist die in Figur 4, 5 nur schematisch angedeutete übliche Spiralfeder 13 angeordnet, welche auf die Gurtrolle 12 eine Vorspannkraft in Gurtaufwickelrichtung ausübt. Weiter ist an der Gurtrolle 11 eine Abwickel-Sperranordnung 14 vorgesehen, die die Drehung der Gurtrolle 12 in Gurtabzugsrichtung bei versuchtem schnellen Gurtauszug und vorzugsweise auch bei unfallbedingten Beschleunigungen sperrt.

Nach den Figuren 3, 6 und 7 befindet sich im Umfang des Kolbens 19 eine Periphernut 30, die unten über eine Ringstufe 31 und oben über eine Klemmkeilfläche 32 in den normalen Durchmesser des Kolbens 19 bzw. der Kolbenstange 25 übergehen. In der Periphernut sind Klemmkugeln 33 derart angeordnet, dass sie mit der Periphernut 30 einen Freilauf bilden, der die Bewegung des Kolbens 19 nach oben gestattet, nach unten jedoch sperrt.

Montage und Gebrauch der beschriebenen Sicherheitsvorrichtung gehen wie folgt vor sich:

Nach Montage der Schiene 23 an der B-Säule des Fahrzeugs wird zunächst das Gurt-Ablenkglied 21 auf die Schiene 23 aufgeschoben. Bevorzugt ist das Gurt-Ablenkglied 21 in einer gewünschten Höhenlage an der Schiene 23 festlegbar. Anschließend wird der Rahmen 26 mit dem daran befestigten Kolben 19 durch die Öffnung 24 in den Zylinder 22 eindringt und die Führungsstangen 28 in die Nuten 23' der Schiene 23 gelangen und in diesen nach unten gleiten. Schließlich stößt der Boden 26' des Rahmens 26 an der oberen Schmalseite der Schiene 23 an, was in Figur 4 gezeigt ist.

Schließlich soll sich im unteren Bereich der Schiene 23 noch ein Anschlag 40 (Figur 3) befinden, der ein Herausschieben des Gurt-Ablenkgliedes 21 aus der Schiene 23 nach unten verhindert. Nach oben soll die Bewegung des Gurtumlenkgliedes 20, 26 so begrenzt sein, dass der Kolben 19 und die Führungsstangen 28 sich nicht von der Schiene 23 lösen können. Derartige Halterungsmittel 41 sind in Figur 5 nur rein schematisch gestrichelt angedeutet.

Beim Einschieben den Kolbens 19 in den Zylinder 22 ist darauf zu achten, dass das Kugelgesperre 29 nicht sperrt. Dies kann z. B. auch dadurch erreicht werden, dass der Rahmen 26 vor dem Anbau der Schiene 23 an das Fahrzeugchassis 11 kopfgestellt und der Kolben 29 somit von unten in die Öffnung 24 eingeführt wird.

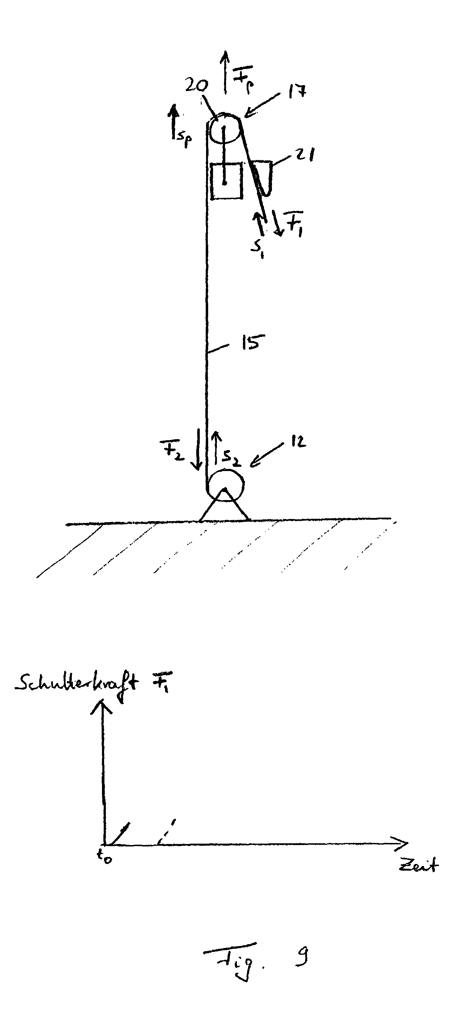

Wenn nach dem Zusammenbau der erfindungsgemäßen Sicherheitsgurtvorrichtung gemäß Figur 4 ein Unfall geschieht, zündet der Gasgenerator 27 und erzeugt im Zylinder 22 einen Druck der den Kolben 19 schlagartig nach oben in die aus Figur 5 ersichtliche Position bewegt. Hierbei werden entsprechende Zugkräfte auf die beidem Trümer des Sicherheitsgurtes 15 ausgeübt, welche dazu führen, dass die Abwickelsperranordnung 14 die Gurtrolle 12 blockiert und der Sicherheitsgurt 15 in der gewünschten Weise gestrafft wird. Gleichzeitig wird die Gurtkraftbegrenzung aktiviert wie nachfolgend in Bezug auf die Figuren 8 bis 12 genauer beschieben ist.

Aufgrund der Ausbildung des Kugelgesperres 29 wird die Aufwärtsbewegung des Kolbens 19 nicht behindert, wie das in Figur 6 angedeutet ist.

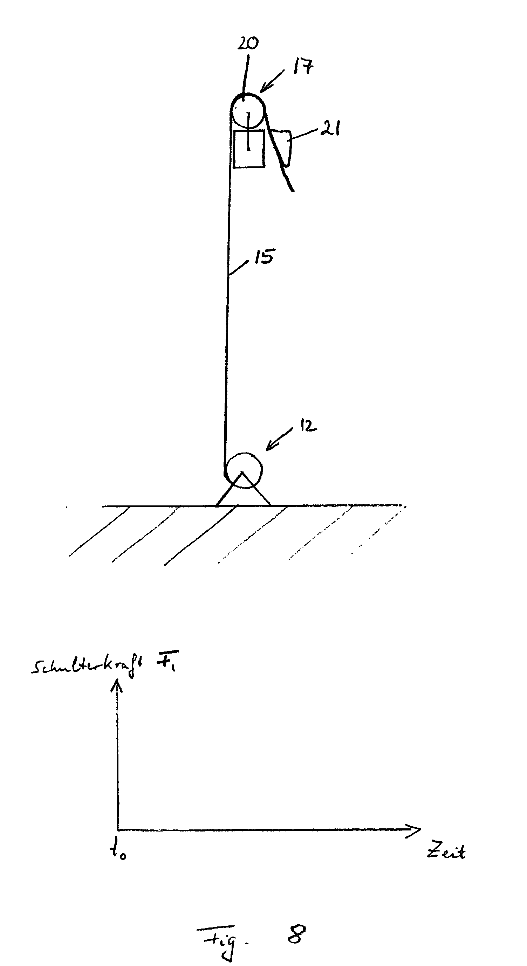

Hat jedoch der Kolben 19 die in Figur 5 angedeutete, durch die Haltemittel 41 bestimmte oberste Position erreicht und lässt schließlich der Druck im Zylinder 22 wegen Verbrauchs des Druckgases nach, so bewegt sich der Kolben 19 unter Einwirkung der Gurtzugkräfte zunächst ein kleines Stück nach unten, wobei die Klemmkugeln 33 durch die entsprechend ausgebildete Keilklemmfläche 32 radial nach außen gegen die Innenwand des Zylinders 22 gedrückt werden. Hier setzen sie sich bevorzugt unter Bildung von Klemmvertiefungen 18 (Figur 7) fest, wodurch ein Absenken des Kolbens 19 innerhalb des Zylinders 22 vermieden wird und durch die erzielte Gurtstraffung erhalten bleibt.

Der Gasgenerator 27 ist über eine Steuerleitung 42 mit einer nicht gezeigten Auslösevorrichtung verbunden, die bei unfallbedingten Beschleunigungen über die Steuerleitung 42 einen Zündimpuls an den Gasgenerator 27 abgibt, so dass dieser zündet und Druckgas in den Zylinder 22 schickt.

Die Figuren 8 bis 12 illustrieren schematisch die Funktionsweise sowie die resultierenden Schulterkräfte eines Gurtsystems nach einer Ausgestaltung der Erfindung.

Die Gurtrolle 12 ist an einen nicht gezeigten Gurtkraftbegrenzer des in den Figuren 1 und 2 gezeigten Typs gekoppelt.

Figur 8 stellt das Gurtsystem im Ruhestand (zum Zeitpunkt t₀) dar, d. h. es werden noch keine Kräfte durch den Sicherheitsgurt 15 auf die Schulter eines Fahrzeuginsassen ausgeübt.

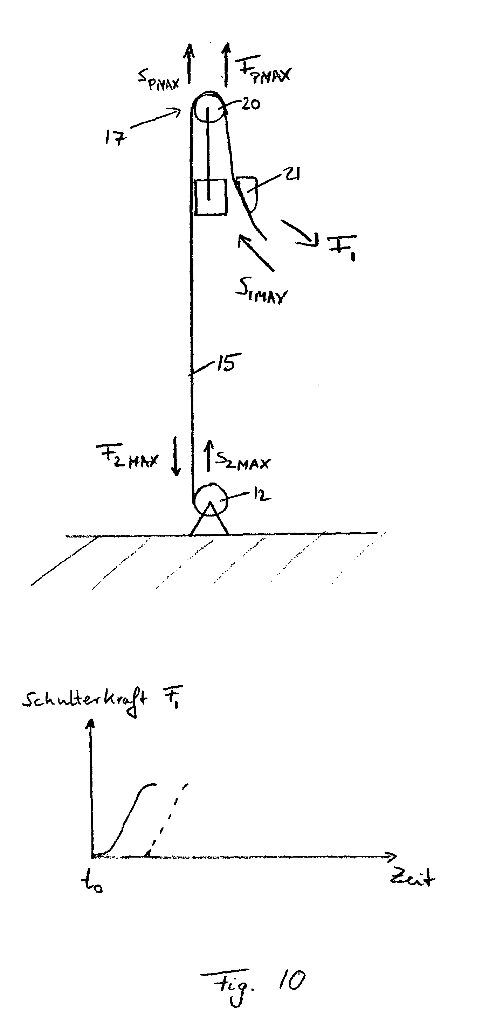

Figur 9 zeigt das Gurtsystem kurz nach Aktivierung des Gurtstraffers sowie des Gurtkraftbegrenzers im Fall eines Unfalls. Zu diesem Zweitpunkt wirkt auf die Umlenkrolle 20 in Gurtstraffrichtung eine Kraft Fₚ ein. Die Umlenkrolle 20 wird dadurch wie in den Figuren 3 bis 7 beschrieben um eine Strecke Sₚ nach oben verschoben.

Die auf die Fahrzeuginsassen einwirkende Schulterkraft F₁ wird bestimmt durch die Kräfte Fₚ und F₂. F₂ ist die an der Gurtrolle 12 auf den Sicherheitsgurt 15 einwirkende Kraft. Diese wird bestimmt durch die einsetzende Verdrehung des Torsionsstabs des Gurtkraftbegrenzers, wie in Bezug auf die Figuren 1 und 2 beschrieben.

Die Verdrehung des Torsionsstabs wird durch den sich straffenden Gurt ausgelöst. Auf diese Weise wird der Torsionsstab vortordiert, so dass die Gurtkraftbegrenzung während der Gurtstraffphase auf ein optimales Niveau gebracht wird.

In Figur 9 unten ist der Verlauf der Schulterkraft F₁ über die Zeit als durchgehende Linie dargestellt. Im Vergleich dazu ist als gestrichelte Linie die Schulterkraft bei einem Gurtsystem dargestellt, bei dem keine Vortordierung des Torsionsstabs während der Gurtstraffphase stattfindet. Da hier keine Vortordierung des Torsionsstabs während der Gurtstraffung stattfindet, steigt die Schulterkraft erst mit Verspätung an.

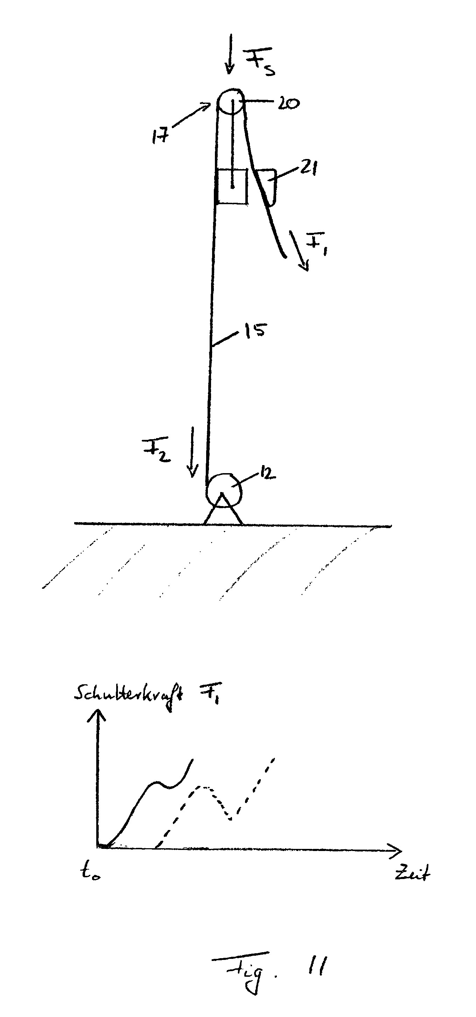

Figur 10 stellt das Gurtsystem sowie die resultierende Schulterkraft nach Abschluss der Gurtstraffung dar. Die Umlenkrolle 20 ist um eine maximale Strecke S_{Pmax} nach oben verschoben.

Da ab diesem Zeitpunkt keine weitere Gurtstraffung mehr stattfindet, nimmt auch die auf den Fahrzeuginsassen wirkende Schulterkraft F₁ vorübergehend nicht weiter zu.

Der Torsionsstab ist zu diesem Zeitpunkt soweit verdreht, dass von nun an eine optimale Gurtkraftbegrenzung auf einem maximalen Kraftniveau erreicht werden kann. Beim anschließenden vollständigen Eintauchen des Fahrzeuginsassen in den Sicherheitsgurt findet daher eine Kraftbegrenzung sofort auf maximalem Niveau statt und nicht mit Verzögerung.

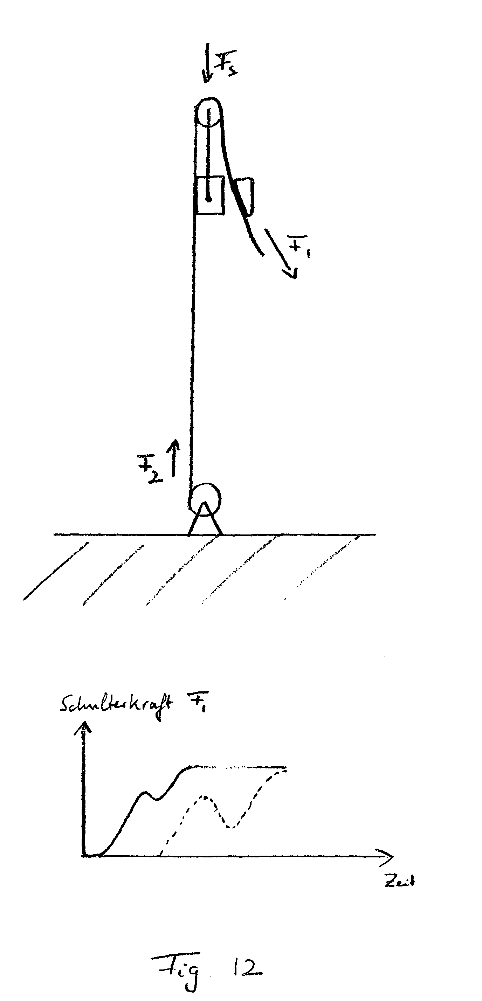

Figur 11 entspricht kräftemäßig jenem Zeitraum, in dem sich die Bewegungsrichtung der Umlenkrolle 20 nach Abschluss der Gurtstraffung umkehrt. Als Folge dessen nimmt die Schulterkraft F₁ sogar kurzzeitig ab. Kurz nach dieser Bewegungsumkehrung rastet der mit der Umlenkrolle 20 verbundene Kolben 19 ein und verhindert ein weiteres Nachgeben des Gurtes 15, wie in Bezug auf Figur 7 beschrieben.

Anschließend steigt die Schulterkraft durch den nun in den Gurt 15 eintauchenden Fahrzeuginsassen wieder an.

Figur 12 entspricht kräftemäßig jenem Zeitraum, nachdem der Fahrzeuginsasse vollständig in den Sicherheitsgurt eingetaucht ist und eine konstante Kraftbewegung auf maximalem Niveau erreicht ist. Die gestrichelte Linie zeigt, dass dieser Zustand bei dem herkömmlichen Gurtsystem erst später erreicht wird.

Die Erfindung ist nicht auf die beschriebenen Ausführungsbeispiele beschränkt, sondern umfasst Modifikationen im Rahmen des durch die Ansprüche festgelegten Schutzbereiches.

### Liste der Bezugszeichen

- 1: Spindel
- 2: Spindellager
- 3: Flansch
- 4: Sperrklinke
- 5: Torsions- oder Drehstab
- 7: Drehachse
- 11: Fahrzeugchassis
- 12: Gurtrolle
- 13: Spiralfeder
- 14: Abwickel-Sperranordung
- 15: Sicherheitsgurt
- 16: Bewegungserzeugungsvorrichtung
- 17: Gurtumlenkvorrichtung
- 18: Klemmvertiefung
- 19: Kolben
- 20: Umlenkrolle
- 21: Gurt-Ablenkglied
- 21': Abrundung
- 22: Zylinder
- 23: Schiene
- 23': Nut
- 24: Öffnung
- 25: Kolbenstange
- 26: Rahmen
- 26': Boden
- 27: Gasgenerator
- 28: Führungsstange
- 29: Rücklaufsperre (Kugelgesperre)
- 30: Periphernut
- 31: Ringstufe
- 32: Klemmkeilfläche
- 33: Klemmkugel
- 34: Bolzen
- 35: Bohrung
- 36: Gewindebohrung
- 37: Durchgangskanal
- 38: Halterungsausnehmung
- 39: Feder
- 40: Anschlag
- 41: Haltemittel
- 42: Steuerleitung

## Patentansprüche

1. Sicherheitsgurtvorrichtung für ein Fahrzeug
- mit einem Sicherheitsgurt (15) zum Sichern eines Fahrzeuginsassen,
- mit einem Gurtkraftbegrenzer mit einem Torsionsstab, der im Falle eines Unfalls im Rahmen eines Torsionsvorganges zur Gurtkraftbegrenzung tordiert wird, wenn der Fahrzeuginsasse unfallbedingt in den Sicherheitsgurt eintaucht,
- mit einer Verriegelungsvorrichtung zur Verriegelung des Torsionsstabes (5) zwischen der Gurtrolle (12) und dem Fahrzeugchassis, wobei der Gurtkraftbegrenzer durch Aktivierung der Verriegelungsvorrichtung auslösbar ist, und
- mit einer Aktivierungseinrichtung, zur im wesentlichen gleichzeitigen Aktivierung der Verriegelungsvorrichtung und eines Gurtstraffers,
**dadurch gekennzeichnet,**
- **dass** der Gurtkraftbegrenzer eine den Gurtstraffer umfassende Vortorsionseinrichtung aufweist, die den Torsionsstab im Rahmen eines Vortordierens um einen vorgegebenen Torsions-Verdrehwinkel verdreht, und
- **dass** der Gurtstraffer derart ausgestaltet ist, dass die Vortorsionseinrichtung bei Detektion des Unfalls die Vortorsion des Torsionsstabes auslösen kann, bevor der Fahrzeuginsasse in den Sicherheitsgurt eintaucht und den oben bereits erwähnten Torsionsvorgang zur Gurtkraftbegrenzung hervorruft.

2. Sicherheitsgurtvorrichtung nach Anspruch 1 oder 2, **dadurch gekennzeichnet, dass** der vorgegebene Torsions-Verdrehwinkel derart gewählt ist, dass der Torsionsstab ein Kraftniveau erreicht, das höher als das Kraftniveau des untordierten Torsionsstabes ist.

3. Sicherheitsgurtvorrichtung nach Anspruch 1 oder 2, mit einer am Fahrzeugchassis drehbar befestigten Gurtrolle (12) zum Auf- und Abrollen des Sicherheitsgurtes (15).

4. Sicherheitsgurtvorrichtung nach Anspruch 1, 2 oder 3, mit
- einem Gurtschloss zur lösbaren Verankerung des Sicherheitsgurtes (15) am Fahrzeug; und
- einer Gurtumlenkvorrichtung (17) zum Umlenken des Sicherheitsgurtes (15) zwischen der Gurtrolle (12) und dem Gurtschloss.

5. Sicherheitsgurtvorrichtung nach Anspruch 4, wobei der Gurtstraffer eine Bewegungserzeugungsvorrichtung (16) aufweist, zur Verschiebung zumindest eines Teils (20, 26) der Gurtumlenkvorrichtung (17) in Gurtstraffrichtung bei Auslösung des Gurtstraffers durch die Aktivierungseinrichtung.

6. Sicherheitsgurtvorrichtung nach Anspruch 5, wobei die Gurtumlenkvorrichtung (17) aus einem Gurt-Umlenkglied (20, 26) und einem Gurt-Ablenkglied (21) besteht, das unterhalb des Gurt-Umlenkgliedes (20, 26) höhenverstellbar am Fahrzeugchassis (11) angebracht ist, und wobei die Bewegungserzeugungsvorrichtung (16) nur auf das Gurt-Umlenkglied (20, 26) einwirkt.

7. Sicherheitsgurtvorrichtung nach Anspruch 5 oder 6, wobei die Bewegungserzeugungsvorrichtung (16) eine aufrecht am Fahrzeugchassis (11) befestigte Schiene (23) aufweist, an der das Gurt-Umlenkglied (20, 26) von der Bewegungserzeugungsvorrichtung (16) bei Auslösung zumindest im wesentlichen nach oben bewegbar und an das Gurt-Ablenkglied (21) unterhalb des Gurt-Umlenkglieds (20, 26) höhenverstellbar angebracht ist.

8. Sicherheitsgurtvorrichtung nach einem der Ansprüche 5 bis 7, wobei die Bewegungserzeugungsvorrichtung (16) eine schlagartig mit Druck beaufschlagbare Kolben-Zylinder-Anordnung (19, 22) ist.

9. Sicherheitsgurtvorrichtung nach Anspruch 7 oder 8, wobei der Zylinder (22) innerhalb der Schiene (23) sich in deren Längsrichtung erstreckend angebracht ist.

10. Sicherheitsgurtvorrichtung nach Anspruch 9, wobei die Schiene (23) zumindest im wesentlichen vertikal an der B-Säule des Fahrzeugs befestigt ist.

11. Sicherheitsgurtvorrichtung nach Anspruch 9 oder 10, wobei der Zylinder (22) oben offen ist und sich durch die obere Öffnung (24) vom Kolben (19) her eine Kolbenstange (25) zum Gurtumlenkglied (20, 26) erstreckt.

12. Sicherheitsgurtvorrichtung nach einem der Ansprüche 5 bis 11, wobei die Bewegungserzeugungsvorrichtung (16) einen im Gefahrenfalle zündbaren Gasgenerator (27) umfasst und der Gasgenerator (27) an den Innenraum des Zylinders (22) druckmäßig angeschlossen ist.

13. Sicherheitsgurtvorrichtung nach Anspruch 12, wobei der Zylinder (22) in der Schiene (23) von oben nach unten durchgeht und der Gasgenerator (27) unten in den Zylinder (22) eingesetzt ist.

14. Sicherheitsgurtvorrichtung nach einem der Ansprüche 5 bis 13, wobei das Gurt-Umlenkglied aus einem mit einer Kolbenstange (25) verbundenen Rahmen (26) und einem in diesem angeordneten Umlenkelement, insbesondere einer Umlenkrolle (20) für den Sicherheitsgurt besteht.

15. Sicherheitsgurtvorrichtung nach einem der Ansprüche 5 bis 14, wobei der Rahmen (26) Führungselemente aufweist, mit welchem dazu komplementäre Führungen (23') der Schiene (23) zusammenarbeiten.

16. Sicherheitsgurtvorrichtung nach Anspruch 15, wobei die Führungselemente sich vom Rahmen (26) nach unten erstreckende Führungsstangen (28) sind, die mit seitlichen Nuten (23') in der Schiene zusammenarbeiten.

17. Sicherheitsgurtvorrichtung nach Anspruch 16, wobei die seitlichen Nuten (23') für die Aufnahme der Führungselemente (28) die gleichen sind, die das Gurt-Ablenkglied (21) führen.

18. Sicherheitsgurtvorrichtung nach einem der Ansprüche 5 bis 17, wobei zwischen der Schiene (23) und dem Gurt-Umlenkglied (20, 26) eine Rücklaufsperre (29) vorgesehen ist.

19. Sicherheitsgurtvorrichtung nach Anspruch 18, wobei die Rücklaufsperre (29) nach Art eines Freilaufs arbeitet.

20. Sicherheitsgurtvorrichtung nach Anspruch 18 oder 19, wobei zwischen den Wänden des Zylinders (22) und des Kolbens (19) bzw. der Kolbenstange (25) eine bei Bewegung in Gurtstraffrichtung entsperrte und bei Bewegung entgegen Gurtstraffrichtung sperrende Kugelgesperre (29) als Rücklaufsperre vorgesehen ist.

21. Sicherheitsgurtvorrichtung nach Anspruch 20, wobei in dem Kolben (19) bzw. der Kolbenstange (25) eine Periphernut(30) vorgesehen ist, die unten stufenförmig (31) und oben klemmkeilförmig (32) ausgebildet ist und in der rundum Klemmkugeln (33) untergebracht sind.

22. Sicherheitsgurtvorrichtung nach einem der Ansprüche 5 bis 21, wobei die Bewegung der Gurtumlenkvorrichtung (17) oder eines Teils (20, 26) derselben bei einer Auslösung auf einen insbesondere für die Gurtstraffung erforderlichen Wert begrenzt ist.

23. Sicherheitsgurtvorrichtung nach Anspruch 22, **dadurch gekennzeichnet, dass** zwischen der Schiene (23) und dem Gurt-Umlenkglied (20, 26) Haltemittel (41) wirksam sind, die die Gurtstraffbewegung des Gurt-Umlenkgliedes (20, 26) zulassen, jedoch so begrenzen, dass es nach der Gurtstraffung stehenbleibt.

24. Verfahren zur Betätigung eines einen Fahrzeuginsassen sichernden Sicherheitsgurtsystems, bei dem im Falle eines Unfalls eine Gurtkraftbegrenzung mit Hilfe eines Torsionsstabs bewirkt wird, indem dieser im Rahmen eines Torsionsvorganges tordiert wird, sobald der Fahrzeuginsasse unfallbedingt in den Sicherheitsgurt eintaucht,
**dadurch gekennzeichnet, dass**
- der Unfall detektiert wird und
- der Torsionsstab nach der Unfalldetektion vortordiert wird, indem er um einen vorgegebenen Torsions-Verdrehwinkel verdreht wird, bevor der Fahrzeuginsasse in den Sicherheitsgurt eintaucht und den erwähnten Torsionsvorgang auslöst.

25. Verfahren nach Anspruch 24, wobei das Straffen des Sicherheitsgurtes durch Bewegen zumindest eines Teils einer Gurtumlenkvorrichtung in Gurtstraffrichtung bewirkt wird.

26. Verfahren nach Anspruch 24, wobei der Torsionsstab mit einer Gurtrolle gekoppelt ist und durch Straffen des Gurtes ein Drehmoment auf die Gurtrolle einwirkt und damit das Vortordieren des Torsionsstabs bewirkt wird.

## Claims

1. Safety belt apparatus for a vehicle,
- with a safety belt (15) for securing a vehicle occupant,
- with a belt force limiter with a torsion bar, which is torsioned in the event of an accident in the context of a torsioning operation for belt force limitation if the vehicle occupant plunges into the safety belt as a result of the accident,
- with a locking apparatus for locking the torsion bar (5) between the belt reel (12) and the vehicle chassis, the belt force limiter being triggerable by activating the locking apparatus, and
- with an activation device for substantially simultaneous activation of the locking apparatus and a belt tensioner,
**characterized**
- **in that** the belt force limiter has a pretorsioning device which comprises the belt tensioner and rotates the torsion bar through a predetermined torsion rotation angle in the context of a pretorsioning operation, and
- **in that** the belt tensioner is configured in such a manner that the pretorsioning device, when the accident is detected, can trigger the pretorsioning of the torsion bar before the vehicle occupant plunges into the safety belt and causes the torsioning operation for belt force limiting which has already been mentioned above.

2. Safety belt apparatus according to Claim 1 or 2, **characterized in that** the predetermined torsion rotation angle is selected to be such that the torsion bar reaches a force level which is higher than the force level of the untorsioned torsion bar.

3. Safety belt apparatus according to Claim 1 or 2, having a belt reel (12), which is secured rotatably to the vehicle chassis, for winding up and unwinding the safety belt (15).

4. Safety belt apparatus according to Claim 1, 2 or 3, with:
- a belt reel (12) fixed rotatably on the vehicle chassis and provided for winding and unwinding the safety belt (15); and
- a belt buckle for the releasable anchoring of the safety belt (15) on the vehicle;
- a belt redirection apparatus (17) for redirecting the safety belt (15) between the belt reel (12) and the belt buckle.

5. Safety belt apparatus according to Claim 4, the belt tensioner having a motion-producing apparatus (16) for displacing at least one part (20, 26) of the belt redirection apparatus (17) in the direction of belt tensioning when the belt tensioner is triggered by the activation device.

6. Safety belt apparatus according to Claim 5, the belt redirection apparatus (17) comprising a belt redirection member (20, 26) and a belt deflection member (21), which is mounted in a vertically adjustable manner on the vehicle chassis (11) below the belt redirection member (20, 26), and the motion-producing apparatus (16) acting only on the belt redirection member (20, 26).

7. Safety belt apparatus according to Claim 5 or 6, the motion-producing apparatus (16) having a rail (23) which is fixed upright on the vehicle chassis (11) and on which the belt redirection member (20, 26) can be moved at least essentially upward by the motion-producing apparatus (16) when triggered and on which the belt deflection member (21) is mounted in a vertically adjustable manner below the belt redirection member (20, 26).

8. Safety belt apparatus according to one of Claims 5 to 7, the motion-producing apparatus (16) being a piston-cylinder arrangement (19, 22) that can be subjected abruptly to pressure.

9. Safety belt apparatus according to Claim 7 or 8, the cylinder (22) being mounted within the rail (23), extending in the longitudinal direction of the latter.

10. Safety belt apparatus according to Claim 9, the rail (23) being fixed at least essentially vertically on the B-post of the vehicle.

11. Safety belt apparatus according to Claim 9 or 10, the cylinder (22) being open at the top, and a piston rod (25) extending through the upper opening (24) from the piston (19) to the belt redirection member (20, 26).

12. Safety belt apparatus according to any of Claims 5 to 11, the motion-producing apparatus (16) comprising a gas generator (27) that can be ignited in the event of danger, and the gas generator (27) being connected in terms of pressure to the interior of the cylinder (22).

13. Safety belt apparatus according to Claim 12, the cylinder (22) passing from the top downward in the rail (23), and the gas generator (27) being inserted into the cylinder (22) from below.

14. Safety belt apparatus according to any of Claims 5 to 13, the belt redirection member comprising a frame (26), which is connected to a piston rod (25), and a redirection element arranged in the latter, in particular a redirection roller (20) for the safety belt.

15. Safety belt apparatus according to any of Claims 5 to 14, the frame (26) having guide elements, with which guides (23'), complementary to the latter, of the rail (23) interact.

16. Safety belt apparatus according to Claim 15, the guide elements being guide bars (28), which extend downward from the frame (26) and interact with lateral grooves (23') in the rail.

17. Safety belt apparatus according to Claim 16, the lateral grooves (23') for accommodating the guide elements (28) being the same as those which guide the belt deflection member (21).

18. Safety belt apparatus according to any of Claims 5 to 17, a reverse-motion locking mechanism (29) being provided between the rail (23) and the belt redirection member (20, 26).

19. Safety belt apparatus according to Claim 18, the reverse-motion locking mechanism (29) operating in the manner of a one-way clutch.

20. Safety belt apparatus according to Claim 18 or 19, a ball-type locking mechanism (29), which is unlocked during motion in the direction of belt tensioning and locks during motion counter to the direction of belt tensioning, being provided as a reverse-motion locking mechanism between the walls of the cylinder (22) and the piston (19) or piston rod (25).

21. Safety belt apparatus according to Claim 20, a peripheral groove (30), which is of step-shaped (31) construction at the bottom and wedge-shaped (32) construction at the top and in which wedging balls (33) are accommodated all the way round, being provided in the piston (19) or piston rod (25).

22. Safety belt apparatus according to any of Claims 5 to 21, the movement of the belt redirection apparatus (17) or part (20, 26) of the latter being limited upon triggering to a value, in particular a value required for belt tensioning.

23. Safety belt apparatus according to Claim 22, **characterized in that** retention means (41), which permit the belt-tensioning motion of the belt redirection member (20, 26) but limit it to such an extent that the latter remains stationary after belt tensioning, act between the rail (23) and the belt redirection member (20, 26).

24. Method for actuating a safety belt system securing a vehicle occupant, in which a belt force limitation is effected in the event of an accident with the aid of a torsion bar by the latter being torsioned in the context of a torsioning operation as soon as the vehicle occupant plunges into the safety belt as a result of the accident, **characterized in that**
- the accident is detected; and
- the torsion bar is pretorsioned after detection of the accident by being rotated through a predefined torsion rotation angle before the vehicle occupant plunges into the safety belt and triggers the torsioning operation already mentioned.

25. Method according to Claim 24, the tensioning of the safety belt being brought about by moving at least one part of a belt redirection apparatus in the direction of belt tensioning.

26. Method according to Claim 24, the torsion bar being coupled to a belt reel and tensioning of the belt causing a torque to act on the belt reel and hence bringing about the pretorsioning of the torsion bar.

## Revendications

1. Dispositif de ceinture de sécurité pour un véhicule automobile,
- avec une ceinture de sécurité (15) destinée à retenir un passager du véhicule,
- avec un limiteur d'effort muni d'une barre de torsion qui, en cas d'accident, est tordue dans le cadre d'un processus de torsion destiné à limiter la force de la ceinture lorsque le passager, en raison de l'accident, glisse sous la ceinture de sécurité,
- avec un dispositif de verrouillage destiné à verrouiller la barre de torsion (5) entre l'enrouleur de ceinture (12) et le châssis du véhicule, le limiteur d'effort pouvant être déclenché par l'activation du dispositif de verrouillage, et
- avec un dispositif d'activation destiné à actionner, sensiblement simultanément, le dispositif de verrouillage et un rétracteur de ceinture,
**caractérisé**
- **en ce que** le limiteur d'effort comporte un dispositif de pré-torsion, qui comporte le rétracteur de ceinture et qui fait tourner la barre de torsion dans le cadre d'une pré-torsion selon un angle de rotation en torsion prédéfini, et
- **en ce que** le rétracteur de ceinture est conçu de telle sorte que le dispositif de pré-torsion peut déclencher le processus de pré-torsion de la barre de torsion au moment de la détection de l'accident, avant que le passager ne glisse sous la ceinture de sécurité, et induit le processus de torsion, évoqué ci-dessus, en vue de limiter la force de la ceinture.

2. Dispositif de ceinture de sécurité selon la revendication 1 ou 2, **caractérisé en ce que** l'angle de rotation en torsion prédéfini est choisi de telle sorte que la barre de torsion atteint un niveau de force supérieur au niveau de force de la barre de torsion non tordue.

3. Dispositif de ceinture de sécurité selon la revendication 1 ou 2, avec un enrouleur de ceinture (12), fixé de manière rotative contre le châssis du véhicule et destiné à enrouler et dérouler la ceinture de sécurité (15).

4. Dispositif de ceinture de sécurité selon la revendication 1, 2 ou 3, comportant
- une serrure pour l'ancrage amovible de la ceinture de sécurité (15) contre le véhicule ; et
- un dispositif de renvoi (17) pour le retournement de la ceinture de sécurité (15) entre l'enrouleur de ceinture (12) et la serrure.

5. Dispositif de ceinture de sécurité selon la revendication 4, dans lequel le rétracteur de ceinture comporte un dispositif d'entraînement en mouvement (16), destiné à déplacer au moins une partie (20, 26) du dispositif de renvoi (17) dans le sens de la rétraction de la ceinture en cas de déclenchement du rétracteur de ceinture par le dispositif d'activation.

6. Dispositif de ceinture de sécurité selon la revendication 5, dans lequel le dispositif de renvoi de ceinture (17) est formé par un organe de renvoi (20, 26) et un organe de déviation (21), qui est monté en dessous de l'organe de renvoi (20, 26) de manière réglable en hauteur contre le châssis du véhicule (11), et dans lequel le dispositif d'entraînement en mouvement (16) agit uniquement sur l'organe de renvoi (20, 26).

7. Dispositif de ceinture de sécurité selon la revendication 5 ou 6, dans lequel le dispositif d'entraînement en mouvement (16) comporte un rail (23), qui est fixé verticalement sur le châssis du véhicule (11) et sur lequel l'organe de renvoi (20, 26) peut être déplacé au moins sensiblement vers le haut par le dispositif d'entraînement en mouvement (16) en cas de déclenchement et qui est monté réglable en hauteur sur l'organe de déviation (21) en dessous de l'organe de renvoi (20, 26).

8. Dispositif de ceinture de sécurité selon l'une quelconque des revendications 5 à 7, dans lequel le dispositif d'entraînement en mouvement (16) est un système à piston et cylindre (19, 22) pouvant être sollicité brusquement par une pression.

9. Dispositif de ceinture de sécurité selon la revendication 7 ou 8, dans lequel le cylindre (22) est logé à l'intérieur du rail (23) en s'étendant dans la direction longitudinale de celui-ci.

10. Dispositif de ceinture de sécurité selon la revendication 9, dans lequel le rail (23) est fixé au moins sensiblement verticalement sur le montant B du véhicule.

11. Dispositif de ceinture de sécurité selon la revendication 9 ou 10, dans lequel le cylindre (22) est ouvert vers le haut et une tige de piston (25) s'étend à travers l'ouverture supérieure (24) à partir du piston (19) vers l'organe de renvoi (20, 26).

12. Dispositif de ceinture de sécurité selon l'une quelconque des revendications 5 à 11, dans lequel le dispositif d'entraînement en mouvement (16) comporte un générateur de gaz (27) pouvant être amorcé en cas de danger et le générateur de gaz (27) est raccordé sous pression avec le volume intérieur du cylindre (22).

13. Dispositif de ceinture de sécurité selon la revendication 12, dans lequel le cylindre (22) traverse le rail (23) du haut vers le bas et le générateur de gaz (27) est monté en bas dans le cylindre (22).

14. Dispositif de ceinture de sécurité selon l'une quelconque des revendications 5 à 13, dans lequel l'organe de renvoi est formé par un cadre (26), relié à la tige de piston (25), et un élément de renvoi en particulier une poulie (20) pour la ceinture de sécurité, agencé dans ledit cadre.

15. Dispositif de ceinture de sécurité selon l'une quelconque des revendications 5 à 14, dans lequel le cadre (26) comporte des éléments de guidage qui coopèrent avec des guidages complémentaires (23') du rail (23).

16. Dispositif de ceinture de sécurité selon la revendication 15, dans lequel les éléments de guidage sont des tiges de guidage (28) qui s'étendent vers le bas à partir du cadre (26) et qui coopèrent avec des rainures (23') latérales, ménagées dans le rail.

17. Dispositif de ceinture de sécurité selon la revendication 16, dans lequel les rainures latérales (23') destinées à recevoir les éléments de guidage (28) sont les mêmes que celles qui guident l'organe de déviation (21).

18. Dispositif de ceinture de sécurité selon l'une quelconque des revendications 5 à 17, dans lequel il est prévu un élément anti-retour (29) entre le rail (23) et l'organe de renvoi (20, 26).

19. Dispositif de ceinture de sécurité selon la revendication 18, dans lequel l'élément anti-retour (29) fonctionne à la manière d'une roue libre.

20. Dispositif de ceinture de sécurité selon la revendication 18 ou 19, dans lequel il est prévu, entre les parois du cylindre (22) et le piston (19) ou la tige de piston (25), un élément d'encliquetage sphérique (29), formant l'élément anti-retour, débloqué en cas de mouvement dans le sens de rétraction de la ceinture et bloquant en cas de mouvement dans le sens opposé à la rétraction de la ceinture.

21. Dispositif de ceinture de sécurité selon la revendication 20, dans lequel il est prévu dans le piston (19) ou la tige de piston (25) une rainure périphérique (30), qui forme un décrochement (31 ) en bas et forme une clavette de serrage (32) en haut et dans laquelle des billes de serrage (33) sont logées sur tout le pourtour.

22. Dispositif de ceinture de sécurité selon l'une quelconque des revendications 5 à 21, dans lequel le mouvement du dispositif de renvoi (17) ou d'une partie (20, 26) de celui-ci est limité, en cas de déclenchement, à une valeur nécessaire en particulier pour la rétraction de la ceinture.

23. Dispositif de ceinture de sécurité selon la revendication 22, **caractérisé en ce que** des moyens de retenue (41) agissent entre le rail (23) et l'organe de renvoi (20, 26), lesquels autorisent le mouvement de rétraction de la ceinture de l'organe de renvoi (20, 26), mais limitent celui-ci de telle sorte qu'il est immobilisé après la rétraction de la ceinture.

24. Procédé pour la manoeuvre d'un système de ceinture de sécurité destiné à retenir un passager, dans lequel, en cas d'accident, un limiteur d'effort est actionné au moyen d'une barre de torsion, dans la mesure où celle-ci se tord dans le cadre d'un processus de torsion, dès que le passager, en raison de l'accident, glisse sous la ceinture de sécurité,
**caractérisé en ce que**
- l'accident est détecté et,
- après la détection de l'accident, la barre de torsion est pré-tordue en tournant selon un angle de rotation en torsion prédéfini avant que le passager ne glisse sous la ceinture de sécurité et déclenche le processus de torsion évoqué.

25. Procédé selon la revendication 24, dans lequel la rétraction de la ceinture de sécurité est actionnée par le mouvement d'au moins une partie d'un dispositif de renvoi dans le sens de la rétraction de la ceinture.

26. Procédé selon la revendication 24, dans lequel la barre de torsion est couplée à un enrouleur de ceinture et, sous l'effet de la rétraction de la ceinture, un couple de rotation s'exerce sur l'enrouleur de ceinture et provoque ainsi la pré-torsion de la barre de torsion.
